# EUROPEAN PATENT SPECIFICATION

(11) **EP 0 858 439 B1**
(45) Date of publication and mention of the grant of the patent: **23.01.2002**
(21) Application number: 96934857.2
(22) Date of filing: 29.10.1996
(51) Int. Cl.: C05G 3/00, B01J 2/30

(54) **AN ANTI-CAKING AGENT**
ANTIAGGLUTINIERUNGSMITTEL
AGENT ANTI-AGGLUTINANT

(30) Priority: 30.10.1995 FI 955177
(43) Date of publication of application: 19.08.1998
(73) Proprietor: KEMIRA AGRO OY, 02271 Espoo (FI)
(72) Inventor: AHLNÄS, Thomas, FIN-00270 Helsinki (FI); LÖFGREN, Timo, FIN-32360 Espoo (FI); KANKAANPÄÄ, Teija, FIN-29350 Palus (FI)
(74) Representative: Träskman, Berndt Hilding
(86) International application number: FI9600571
(87) International publication number: WO9716396

(56) References cited:
- DE-C- 3 026 395
- US-A- 3 926 841
- DERWENT'S ABSTRACT, No. 76-17494x/10, week 7610; & JP,A,51 006 900 (MITSUBISHI CHEM IND KK), 20 January 1976.
- DERWENT'S ABSTRACT, No. 84-91676/15, week 8415; & JP,A,59 038 289 (NIPPON OILS & FATS KK), 2 March 1984.
- DERWENT'S ABSTRACT, No. 81-24352D/14, week 8114; & JP,A,56 014 494 (KAO SOAP KK), 12 February 1981.

## Description

The present invention relates to an anti-caking agent for a granular fertilizer product, based on a cationic aliphatic amine and a carboxylic acid and a method for its preparation. The invention also relates to the use of said anti-caking agent for preventing the caking tendency of a granular product and to a granular product containing said anti-caking agent.

The storage and handling of many inorganic salts or salt mixtures and granular products containing said salts, like for example fertilizers, are difficult due to their tendency to caking. The tendency to dusting is also a problem associated with these products.

Several solutions have been proposed to handle these problems, like using organic coating agents, possibly in conjunction with a pulverized powdering agent.

Hot fertilizer granules can be mixed with particles of a solid ceraceous coating agent causing the wax to melt and spread onto the surface forming a protecting film. Ceraceous compounds may contain waxes and ceraceous organic compounds, like fatty amines, fatty diamines, fatty amides and fatty acids and salts or mixtures thereof.

Cooled fertilizer granules are usually coated with oil, which is mixed with different compounds having an improved anti-caking effect. Of these, the most commonly used are fatty amines and polyamines or derivatives thereof. Amines, containing hydrocarbon chains of 16-20 carbons, like tallow amine or the amine based on hydrated tallow, are most usually used. The use of fatty acids for this purpose has also been reported.

The use of long chain diamides, like distearoylhexamethylenediamide or dioctadecylsebasindiamide, for the treatment of ammoniumsaltpeter is known from SU 510460.

Other anionic compounds, like sulfonates, have in addition to fatty acids been used to inhibit caking and dusting. Different mixtures of salts of sulfonic acid and alkylsulfonates, where a tacky alkylderivative is especially effective in preventing dusting, have been described in patent CA 1276071.

The neutralized product between the polyethoxylized amine R₁-N[(R₂O)ₙ₁]-H]₂ and the polyethoxylized phosphate ester OP[O-(R₃O)ₙ₂-R₄,R₅,R₆]₃ has been used as a component in the coating agent as described in EP 113687 (Neederlandse Stikstof Maatschappij) together with other ingredients, where R₁ represents an alkyl or alkenyl group having 12-20 carbon atoms, R₂ and R₃ represent alkenyl groups having 2-4 carbon atoms, one of the groups R₄, R₅, R₆ is a hydrogen and the other alkyl groups having 4-12 carbon atoms or alkylaryl groups having 4-12 carbon atoms, and n₁ and n₂ are any number between 0 to 15.

According to the patent SE 419 175 (KenoGard), a good result in inhibiting caking and dusting is achieved by using a granular or prilled coating agent, which is comprised of 20-60% inorganic powder, 10-30% by weight cationic amine R-NH₂ or R-NH-(CH₂)ₙ-NH₂, in which R represents an aliphatic, hydrophobic group containing at least 12 carbon atoms and n is any number between 1 and 5, or a salt thereof, 5-35% by weight wax, 0-20% by weight fatty amide and 5-35% by weight alkoxylated primary aliphatic alcohol, wherein the alkyl group contains at least 8 carbon atoms. Amines, of which the hydrocarbon chain originates from plant or animal fats or oils like tallow, are reported as the most suitable. The amines can occur as salts, e.g. as salts of chlorides, acetates or fatty acids.

The patent EP 48226 (KenoGard) is on its part describing a similar anti-caking agent comprising of 20-60% by weight inorganic powder, 10-35% by weight wax or a fatty amide containing at least 12 carbon atoms in its carboxylic acid chain and 20-60% by weight of a mixture of a carboxylic acid having at least 6 carbon atoms in its alkyl chain and an amine R-NH-(CH₂)ₙ-NH₂.

The method for the preparation of the anti-caking agent as described in the patent DDR 207701 uses 5-30% by weight of an aliphatic amine, which can be either primary, secondary or tertiary, 30-90% by weight of an aromatic or aliphatic fatty acid and 5-40% by weight of an aromatic mono or dicarboxylic acid or derivative thereof, as raw material mixed in a mineral or fatty oil, in which the combined oil content is limited to between 10-90% by weight of the mixture. The- components are reacted by heating the mixture to a temperature of 500 K thereby forming amides. The aliphatic amine may be dipropylenetriamine or a residual from the preparation process of the same. Other by-products or residual amines and fatty acids or derivatives thereof having a carbon to nitrogen product ratio of at least 7:1, are also included for use.

US 3,926,841 discloses an anti-caking composition which is the product of an amine, a carboxylic acid and an alkali. Derwent's Abstract 76-17494x/10 and 84-091676/15 disclose an anti-caking salt based on a monofunctional amine and a monofunctional acid.

The afore mentioned coating agents are though still experiencing huge difficulties with regard to performance, technical usability and commercial availability.

The aim of the present invention is to make available a more powerful anti-caking agent. At the same time the agent should also be suitable for as many granular products as possible. It is also important to make the anti-caking agent compatible with coating agents of other granular products in the field. An anti-caking agent fulfilling all of the afore mentioned criteria should also not be too expensive.

The afore mentioned goals have been achieved with a new anti-caking agent, which according to the invention, comprises a salt having the formula (Ia):

R₁-N(R₃R₄R₅)⁺⁻OOC-R₂-COO⁻⁺N(R₃R₄R₅)-R₁ (Ia)

or the general formula (Ib):

R₁-COC)⁻⁺N(R₃R₄R₅)-R₂-N(R₃R₄R₅)⁺⁻OOC-R₁ (Ib)

in which the groups R₁ represent a hydrocarbyl group having at least 7 carbon atoms, the groups R₂ represent a hydrocarbylene group having 1-22 carbon atoms, and the groups R₃, R₄ and R₅ represent hydrogens and alkyl groups having 1 and 2 carbon atoms. The salt according to the invention is novel and differs significantly from the prior art. The salt is hence a patentable invention.

It has thus been discovered, that a salt having a structure consisting of regular layers, in which hydrophobic organic groups and anionic-cationic salt groups alternate, results in a more powerful anti-caking agent.

The salt compositions between the dicarboxylic acid and amine or the carboxylic acid and a diamine can, according to their way of preparation, react partly into the form of an amide. Hereby it is, however, essential that at least a part of the carboxylic and amino groups are in unreacted form. This can be indicated e.g. by heating the product to the formation temperature of the amide, whereby a drop of weight due to the evaporation of water takes place.

R₁ in the formulae (Ia) and (Ib) is according to a preferred embodiment a hydrocarbyl group having 10-22 carbon atoms. R₂ is according to a preferred embodiment a hydrocarbylene group, i.e. a divalent hydrocarbon group having 2-8 carbon atoms.

Preferably, all of the groups R₃, R₄ and R₅ represent hydrogens.

The invention also relates to an anti-caking agent containing 0,2-20% by weight, preferably 0,5-5% by weight, of a salt according to the general formula (Ia) or (Ib), as well as oil or wax, possibly a filling agent, various anti-caking agents, protecting agents or other additives.

As mentioned, the invention also relates to a method for the preparation of an anti-caking agent for a granular product. The method is characterized in that a compound having a formula (II):

R₁-COOH (II)

is reacted with a compound having the formula (III):

H₂N-R₂-NH₂ (III)

to form a salt having the formula (Ia)':

R₁-COO⁻⁺NH₃-R₂-NH₃⁺⁻OOC-R₁ (Ia)'

or a compound having the formula (IV):

R₁-NH₂ (IV)

is reacted with a compound having the formula (V):

HOOC-R₂-COOH (V)

to form a salt having the formula (Ib)':

R₁-NH₃⁺⁻OOC-R₂-COO⁻NH₃-R₁ (Ib)'

in which the groups R₁ represent a hydrocarbyl group having at least 7 carbon atoms and the groups R₂ represent a hydrocarbylene group having 1-22 carbon atoms.

When the NH₂-group is attached to the group R₂ forming a diamine as depicted in the formula (III), the diamine can either be a simple terminal diamine where two amino groups are attached to the hydrocarbon skeleton or a polyamine having several amino groups in its chain. Useful commercial amines are ethylenediamine (EDA), diethylenetriamine (DETA), triethylenetetraamine (TETA), tetraethylenepentamine (TEPA), pentaethylenehexamine (PEHA), aminoethylpiperazine (AEP), piperazine (DEDA), propylenediamine (1,2-PDA), 1,3-diaminopropane (1,3-PDA), iminobispropylamine (IBPA), dimethylaminopropylamine (DMAPA), methyldiamine (MDA), triethylenediamine (TEDA), N,N,N',N'-tetramethylenediamine (TMEDA), N,N,N',N'-tetramethyl-1,3-butanediamine (TMBDA) and 1,3-butanediaminehexamethylenediamine (HMDA).

Typical monoamines like methylamine, ethylamine, n-propylamine, n-butylamine, n-amylamine or pentylamine, n-hexylamine, n-octylamine, n-decylamine, laurylamine, myrisitylamine, palmitylamine, oleylamine and stearylamine are being formed when the NH₂-group is attached to the group R₁ according to formula (IV).

Also the salts of carboxylic acids may be used, in which case an ionic exchange between the salts take place forming an anti-caking agent according to the invention.

The carboxyl group may represent any carboxylic moiety of the following acids by forming preferably a monocarboxylic acid by being attached to the group R₁ as depicted in the formula (II): butyric acid (butanoic acid), caproic acid (hexanoic acid), caprylic acid (octanoid acid), capric acid (decanoic acid), lauric acid (dodecanoic acid), myristic acid (tetradecanoic acid), palmitic acid (hexadecanoic acid), stearic acid (octadecanoic acid), arachic acid (eicosanoic acid), behenic acid (docosanoic acid), lignoseric acid (tetracosanoic acid), kerotinic acid (hexacosanoic acid) or a corresponding unsaturated acid of the same type like oleic acid (Δ-9,10-octadecanoic acid).

The carboxyl group may be any of the following, when it is attached to the group R₂ as depicted in the formula (V) forming a dicarboxylic acid: oxalic acid, malonic acid, amber acid, glutaric acid, adipic acid, pimelic acid, suberic acid, azelaic acid, sebacic acid, nonanedicarboxylic acid, decanedicarboxylic acid, undecanedicarboxylic acid and dodecanedicarboxylic acid. A preferable alternative is also a mixture of amber acid, adipic acid and glutaric acid, which is obtained as a byproduct of the adipic acid process.

As previously mentioned in connection with the treatment of the groups R₁ and R₂ of the product according to the invention, the acids and/or the amines may contain heteroatoms in the chain or as substituents of the chain. The chains can also be formed from siloxane units and/or fluorinated hydrocarbons depending upon the field of application of the anti-caking agent and the additives.

With regard to the method according to the invention, the substituents R₁ and R₂ are the same as specified in connection with the product.

When the salt according to the invention is prepared from monofunctional and difunctional compounds in the mole ratio R₁:R₂ of 2:1, the anionic and the cationic components neutralize each other. To depart from this equivalent ratio either in the anionic or cationic direction has however been shown to be preferable resulting in better anti-caking properties for some fertilizers. According to an embodiment of the invention, the afore mentioned compounds are reacted with each other by varying the molar ratio R₁:R₂ 1-60%, preferably by 1-20%, in any direction of the 2:1 stoichiometric ratio.

The addition of an anionic or cationic excess can occur either to a previously prepared product according to the invention, to the oil or wax used in the coating agent mixture, or to the coating agent mixture consisting of the compound according to the invention and an oil or a wax. According to an embodiment of the invention, the charge is changed to anionic by adding an excess of either the same anionic surfactant, which the salt according to the invention contains, or another valid anionic surfactant.

It is preferable to alter the charge of the anti-caking agent of the invention to cationic by adding an excess amount of cationic surfactant, which can be the same or different as the component used in the salt according to the invention.

The method according to the invention is implemented physically by e.g. either adding each of the reactants, which are an acid and an amine, to a different oil batch under simultaneous mixing and possible heating, or by mixing and possibly heating the reactants in the same oil batch. Typically approximately two moles of the compound R₁COOH or R₁NH₂ are mixed in the oil used for the coating and approximately one mole of the compound H₂N-R₂-NH₂ or correspondingly HOOC-R₂-COOH is mixed separately in the mixture used for the coating. The mixtures are mixed together and if necessary heated. Alternatively the compounds R₁COOH and H₂N-R₂-NH₂ (or R₁NH₂ and HOOC-R₂-COOH) are mixed in the same oil batch, which is heated, forming the salt spontaneously in the mixture. For example the salts of a primary or secondary diamine and a carboxylic acid or the salts of a dicarboxylic acid and a primary or a secondary amine are possible to prepare by using this method.

According to a second embodiment of the invention, the reactants are either added to separate solvent batches, which are then mixed together, or added to the same solvent batch forming a salt after evaporation of the solvent. Two moles of the compound R₁COOH or R₁NH₂ and approximately one mole of the compound H₂N-R₂-NH₂ or correspondingly HOOC-R₂-COOH are thus typically dissolved separately in an organic solvent followed by adding the solvents together, or the compounds are alternatively dissolved in the same solvent batch and mixed. The salt of the afore mentioned compounds is obtained after evaporating the solvent.

According to a third physical embodiment of the invention, the reactants which preferably are an acid salt and an ammonium salt, are either each added to a separate water batches which are then combined followed by mixing, or added to the same water batch followed by separating the precipitated product from water. Typically approximately two moles of the compounds R₁COOH or R₁NH₂ and one mole of the compound H₂N-R₂-NH₂ or correspondingly HOOC-R₂-COOH are dissolved together or preferably separately in water. The salt that is forming is separating almost completely into the non-aqueous phase, from where it can be removed mechanically (if necessary by heating) and/or e.g. extracting with an organic solvent followed by subsequent evaporation. This method is suitable for the preparation of the salts according to the invention, when either of the compounds R₁COOH (R₁NH₂) or H₂N-R₂-NH₂ (HOOC-R₂-COOH) or both of them are in the form of a salt, for example as a quaternary ammonium halogenide and an alkali metal carboxylate. The counterions, for example halogenide and alkali metal, will then remain in the water solution.

The afore mentioned is of course associated with the fact, that a balanced stoichiometric ratio within certain limits improves the anti-caking properties of the product.

According to another embodiment of the invention, the reactants are added to the coating of the particles of the granular product and reacted in the increased coating temperature environment of the particles. Typically the anionic and cationic precursor of the salt according to the invention is added separately into an oily or melted ceraceous material at the time of the coating agent preparation procedure. If the hereby obtained mixture is used in a temperature, which exceeds the melting point of the salt according to the invention, the anti-caking salt according to the invention does not form until the coating agent is cooled on the surface of the treated granular product.

The afore mentioned specifications set forth in connection with the description of the product and method according to the invention, also apply in connection with the use of the agent.

When implementing the invention in practice, the afore mentioned salt can be ' uniformly applied as a ceraceous coating on the warm granular product, in which case an anti-caking protecting film is formed on the granular surface.

According to another embodiment, the afore mentioned salt is a component of an oily or ceraceous coating mixture, thus protecting the anti-caking of the granular product in an unprecedented way.

A preferable method of usage is as a mixing agent in an oily or ceraceous coating agent mixture, which is applied on the surface of the granular product by spraying pulverized droplets. The temperature of the salt containing an oily or ceraceous coating agent mixture is preferably held so high that the salt according to the invention essentially dissolves or disperses into the used oil, which adjusts the viscosity of the mixture to a sufficiently low level thereby allowing the mixture to be sprayed. Besides oil, waxes in a melting state are also suitable.

The invention also relates to a granular product, which is characterized by having its particles treated with an anti-caking agent or a mixture containing said anti-caking agent, wherein said anti-caking agent is a salt having the following formula (Ia)

R₁-N(R₃R₄R₅)⁺⁻OOC-R₂-COO⁻⁺N(R₄R₅R₆)-R₁ (Ia)

in which R₁ and R₂ are the same as above and R₃, R₄ and R₅ represent hydrogens and alkyl groups having 1 to 2 atoms, and in particular all of R₃, R₄ and R₅ represent hydrogens. Alternatively the salt is preferably having the general formula (Ib)

R₁-COO⁻⁺N(R₃R₄R₅)-R₂-N(R₄R₅R₆)⁺⁻OOC-R₁ (Ib)

in which R₁ and R₂ are the same as above and R₃, R₄ and R₅ represent hydrogens and alkyl groups having 1 to 2 atoms, and in particular all of R₃, R₄ and R₅ represent hydrogens.

The granular product according to the invention may be coated only with the afore mentioned anti-caking agent or with a mixture containing in addition to said salt also oil wax, possibly fillers and other anti-caking agents, protecting agents and additives.

The granular product according to the invention may be for example powder, flour, dust, scales, grits, grain, granulate or a granular product. The product can also be an inorganic salt, an inorganic salt mixture or a granular product containing afore mentioned products. In particular, the granular product may be a fertilizer like the N-P-K fertilizer, which usually easily tends to cake. The anti-caking agent of the invention is surprisingly well suited for a fertilizer of this type.

### Examples

The invention is described closer with the aid of these examples.

### Example 1

A 2:1 mole ratio salt (the salt according to the invention) was prepared from primary technical-grade stearylamine (Noram S/CECA) and adipic acid. The sample was prepared using an adipic acid amount of 2,9 g. Methanol was used as solvent for the adipic acid and ether for the amines.

### Example 2

Comparison. A salt was prepared according to the procedure outlined in example 1, but instead of stearylmonamine a corresponding amount of technical-grade stearyldiamine R-NH-CH₂-CH₂-CH₂-NH₂ (Inipol DS/CECA) was used.

### Example 3

1 part by weight of the aminedicarboxylic acid salts prepared in examples 1-2 was mixed with 9 parts by weight of paraffin mineral oil at a temperature of 80 °C. The prepared coating agent mixtures were tested in order to prevent caking of the fertilizer 20-0-15 (N-P-K) by spraying an 80 °C coating agent mixture at a dosage rate of 2 g/kg or 4g/kg onto the surface of the 40 °C warm fertilizer followed by powdering the surface with talcum, Finntalk P 40, at a dosage rate of 4g/kg. The coated fertilizers were moisturized for 2 h at 25 °C in a relative humidity of 75%. Five fertilizer containing portions, each weighing 100 g, were placed in plastic bags followed by subjecting the bags to a pressure of 1kg/cm² for 1 day after which the bags were dropped one by one lengthwise from an altitude of 50 cm. The fertilizers were then sieved through a 7,1 mm sieve. The caking tendency was measured by determining the portion of fertilizer granules left on the sieve.

The following results were obtained:

| | Moisture content % | Crust content % |
|---|---|---|
| Uncoated: | 1,4 | 47 |

| The salt of example 1 (according to the invention) | | |
|---|---|---|
| 2 % coating | 1,1 | 4 |
| 4 % coating | 1,2 | 0 |
| | | |

| The salt of example 2 (comparison) | | |
|---|---|---|
| 2 % coating | 1,5 | 46 |
| 4 % coating | 1,5 | 42 |

### Example 4

The paraffin mineral oil was blended with 4% by weight of the salt according to example 1 prepared from adipic acid and technical-grade monostearylamine. The mixture was tested in inhibiting the caking tendency of the fertilizer 20-0-15 (N-P-K) following the procedure as outlined in example 4.

A readily available commercial coating agent mixture was selected as a comparison agent to this fertilizer. The following results were obtained:

| | Moisture content % | Crust content % |
|---|---|---|
| Uncoated: | 1,4 | 47 |

| 4 % of the salt according to example 1 in oil | | |
|---|---|---|
| 2 % coating | 1,2 | 13 |
| 4 % coating | 1,2 | 6 |
| | | |

| A commercial coating agent mixture (comparison) | | |
|---|---|---|
| 2 % coating | 1,4 | 28 |
| 4 % coating | 1,3 | 23 |

### Example 5

The coating oil was prepared by mixing paraffin mineral oil with 4% by weight adipic acid and the salt of technical-grade monostearylamine both in the theoretical 1:2 mole ratio as well as modified with an excess anionic or cationic component. The caking tendency of the NPK fertilizer 20-4-8 (N-P-K) was measured by using the method described in example 3 where 2 kg coating oil and 2.5 kg talcum (caking I) and 4 kg coating oil and 4 kg talcum (caking II) were used per each ton of fertilizer.

| Coating agent | Caking % | |
|---|---|---|
| | I | II |
| Theoretical mole ratio | 19 | 7 |
| Stearylamine 9,9 mole % excess | 9 | 7 |
| Stearylamine 19,7 mole % excess | 8 | 3 |
| Adipic acid 4,1 mole % excess | 11 | 5 |
| Adipic acid 8,2 mole % excess | 3 | 3 |

### Example 6

The test in example 5 was continued by increasing the anionic or cationic character of the coating oil, which contained the 1:2 molar ratio salt between adipic acid and technical-grade monostearylamine, by adding an excess of octylamine or octanoic acid.

| Coating agent | Caking % | |
|---|---|---|
| | I | II |
| Octylamine 25 mole % excess | 7 | 4 |
| Octylamine 50 mole % excess | 4 | 2 |
| Octanoic acid 22 mole % excess | 3 | 3 |
| Octanoic acid 44 mole % excess | 6 | 2 |

### Example 7

The test according to examples 5-6 was repeated using the fertilizer NPK (20-0-15) together with the salt between adipic acid and stearyl amine, which produced an excellent result even when a theoretical molar ratio was used. The tendency to form clusters by the test samples was further decreased by increasing the cationic or anionic character of the coating agent:

| Coating agent | | |
|---|---|---|
| | Caking % | |
| | I | II |
| Theoretical molar ratio | 9 | 3 |
| Stearylamine 9,9 mole % excess | 6 | 1 |
| Stearylamine 19,7 mole % excess | 5 | 5 |
| Adipic acid 4,1 mole % excess | 7 | 1 |
| Adipic acid 8,2 mole % excess | 5 | 1 |
| Octylamine 25 mole % excess | 2 | 1 |
| Octylamine 50 mole % excess | 4 | 0 |
| Octanoic acid 22 mole % excess | 3 | 9 |
| Octanoic acid 44 mole % excess | 21 | 6 |

### Example 8 (preparation in oil)

50 g fertilizer coating oil was prepared which contained 96% by weight of oil containing paraffin and 4% by weight of a compound formed between stearic acid and ethylene diamine: 1.79 g stearic acid was dissolved in warm oil in which it melted. 0.21 g of ethylene diamine was gradually added at a temperature of 80 °C. The clear solution became turbid but retained a sufficiently low viscosity at 70-80 °C to be applied by means of nozzles.

### Example 9 (excess of amine)

Fertilizer coating oil was prepared which contained 97% by weight of oil, 2% by weight of a compound between stearic acid and ethylene diamine and 1% by weight of technical stearylic amine so that one part of the coating oil of example 8 was mixed with one part of a mixture containing technical stearylic amine dissolved in a basic oil of the same quality. The sample was stored at a temperature of 70-80 °C and the viscosity remained suitable for coating by means of nozzles.

### Example 10 (comparative example)

Ethylene bis-stearylic amide R-CO-NH-CH₂-CH₂-NH-CO-R, wherein R is a hydrocarbon group originating from stearic acid was prepared, according to Kirk-Othrner, Vol. 2, p. 252, 3rd. Ed. (1978) so that 1 mole of ethylene diamine was gradually mixed with two moles of stearic acid and heated to 165-175 °C under nitrogen atmosphere and heating at 180-185 °C was continued until the weight of the product remained unchanged. After cooling the product was wax-like. The sample was analyzed by Differential Scanning Calorimetry (DSC) whereby a sample of about 2 mg was heated at a rate of 4 °C/min: An endothermic peak corresponding to the melting of a diamide occured at about 142 °C.

### Example 11 (comparative example)

A coating agent corresponding to example 10 was prepared. In the preparation the stearic acid and the ethylene diamine was replaced by the corresponding molar amount of a diamide prepared according to example 10. The diamide was mixed with an oil heated to 80 °C by means of a dispersion apparatus but it did not dissolve. To the resulting mixture was then added a mixture of oil and stearylic amine at 80 °C and the temperature was raised while mixing until the diamide dissolved at a temperature of 126 °C. At this temperature the mixture remained viscous but when cooling it formed harmful solidifications. The composition of the mixture contained 97.1% by weight of oil, 1.9% by weight of ethylene bis-stearylic amide and 1% by weight of technical stearylic amine.

### Example 12 (dry compounds)

A mixture ready for delivery in dry form and for use as a component in anti-caking products by mixing it together with possible other components into warm oil, was prepared as follows:
10.7 g ethylene diamine was mixed into 89.3 g of dry stearic acid in powder form. Thereby the temperature rose to 49 °C. The mixture was allowed to cool after which any formed clods were disintegrated. Thus a dry, finely divided and easily manageable product was formed, in the DSC-analysis of which a large endothermic peak was found at about 96°C and a small peak was found at the melting point of stearic acid, i.e. at 55 °C. By means of a thermic weighing apparatus it was established that during heating the weight of the sample started to sink above about 100 °C, at first gently but above about 160 °C more steeply. This shows that the sample contained carboxylic and amino groups, in the reaction of which water was released.

Also other solid mechanical mixtures of solid compounds according to the invention, such as adipinic acid and stearylic amine are similarly suited to be used as anti-caking agents. In this case the compound according to the invention is primarily formed only when the mixture is dissolved in warm oil.

### Example 13 (concentrate in oil)

44.6 g of stearic acid was melted into 50 g of oil at about 55 °C. Then 5.36 g of technical ethylene diamine was added to the mixture. After cooling a yellowish suspension was obtained in the DSC-analysis of which an endothermic peak was found at 93 °C. By means of thermic weighing device it was established that when heating the sample its weight started to decrease above about 100 °C, at first gently and above about 160 °C more steeply.

## Claims

1. An anti-caking agent for a granular fertilizer product, based on a cationic aliphatic amine and a carboxylic acid, **characterized in that** it comprises a salt having the general formula (Ia):
R₁-N(R₃R₄R₅)⁺⁻OOC⁺⁻R₂-COO⁻⁺N(R₃R₄R₅)-R₁ (Ia)
or the general formula (Ib):
R₁-COO⁻⁺N(R₃R₄R₅)-R₂-N(R₃R₄R₅)⁺⁻OOC-R₁ (Ib)
in which the groups R₁ represent a hydrocarbyl group having at least 7 carbon atoms, the groups R₂ represent a hydrocarbylene group having 1 - 22 carbon atoms, and the groups R₃, R₄ and R₅ represent hydrogens and alkyl groups having 1 and 2 carbon atoms.

2. An anti-caking agent according to claim 1, **characterized in that** the group R₁ is a hydrocarbyl group having 10 - 22 carbon atoms.

3. An anti-caking agent according to claim 1 or 2, **characterized in that** R₂ represents a hydrocarbylene group having 2 - 8 carbon atoms.

4. An anti-caking agent according to claim 1, 2 or 3, **characterized in that** the groups R₃, R₄ or R₅ are hydrogen.

5. An anti-caking agent according to any of the previous claims, **characterized in that** it contains 0,2 - 20% by weight, preferably 0,5 - 5% by weight of a salt having the general formula (Ia) or (Ib) in addition to oil or wax, possible fillers and other anti-caking agents, protecting agents and additives.

6. An anti-caking agent according to any of previous claims, **characterized in that** it for the purpose of adjusting the charge of said salt additionally contains about 5-100 mole% of an excess of an anionic or preferably cationic surface active compound.

7. A method for the preparation of an anti-caking agent for a granular product according to any of the previously described claims, **characterized in that** a compound having a formula (II):
R₁-COOH (II)
is reacted with a compound having the formula (III):
H₂N-R₂-NH₂ (III)
to form a salt having the formula (1a)':
R₁-COO⁻⁺NH₃-R₂-NH₃⁺⁻OOC-R₁ (Ia)'
or a compound having the formula (IV):
R₁-NH₂ (IV)
is reacted with a compound having the formula (V):
HOOC-R₂-COOH (V)
to form a salt having the formula (Ib)':
R₁-NH₃⁺⁻OOC-R₂-COO⁻NH₃-R₁ (Ib)'
in which the groups R₁ represent a hydrocarbyl group having at least 7 carbon atoms and the groups R₂ represent a hydrocarbylene group having 1 - 22 carbon atoms.

8. A method according to claim 7, **characterized in that** R₁ is a hydrocarbyl group containing 10 - 22 carbon atoms.

9. A method according to claim 7 or 8, **characterized in that** R₂ is a hydrocarbylene group having 2 - 8 carbon atoms.

10. A method according to any of the claims 7 - 9, **characterized in that** the molar ratio R₁:R₂ of the compounds to be reacted differ by 1 - 60%, preferably by 1- 20% from the 2:1 stoichiometric ratio.

11. A method according to any of the claims 7 - 10, **characterized in that** the reactants, which are an acid and an amine, are each added to a separate oil batch under simultaneous mixing and possible heating, or by adding the reactants to the same oil batch followed by possible heating.

12. A method according to any of the claims 7 - 11, **characterized in that** the reactants are either each added to a separate solvent batch, which are then combined, or added to the same solvent batch, forming a salt after evaporation of the solvent.

13. A method according to any of the claims 7 - 12, **characterized in that** the reactants which are an acid salt and an ammonium salt, are either each added to a separate water batch, which are then combined, or added to the same water batch followed by separating the precipitated product from water.

14. A method according to any of the claims 7 - 13, **characterized in that** the reactants are added to the coating of the particles of the granular product and reacted in the increased coating temperature environment of the particles.

15. The use of an anti-caking agent according to any of claims 1 - 6 for preventing the cake formation of a granular fertilizer product.

16. The utilization according to claim 15, whereby an oily or ceraceous coating agent mixture is heated to produce a liquid, low-viscous mixture which readily dissolves and disperses the afore mentioned salt and which subsequently can be spread onto the surface of the particles of the granulate product by spraying in the form of fine droplets.

17. A granular fertilizer product, **characterized in that** the granules of the fertilizer have been treated with an anti-caking agent according to any of claims 1 - 6.

18. A granular product according to claim 17, **characterized in that** the particles have been treated with a mixture containing in addition to said salt also oil or wax, possibly fillers and other anti-caking agents, protecting agents and additives.

19. A granular product according to claim 17 or 18, **characterized in that** the fertilizer is an N-P-K fertilizer.

## Patentansprüche

1. Anti-Agglutinierungsmittel für ein körniges Düngemittelprodukt auf Basis eines kationischen aliphatischen Amins und einer Carbonsäure, **dadurch gekennzeichnet, dass** es ein Salz mit der allgemeinen Formel (Ia) :
R₁-N(R₃R₄R₅)⁺⁻OOC-R₂-COO⁻⁺N(R₃R₄R₅)-R₁ (Ia)
oder der allgemeinen Formel (Ib):
R₁-COO⁻⁺N(R₃R₄R₅)-R₂-N(R₃R₄R₅)⁺⁻OOC-R₁ (Ib)
umfasst, in denen die Gruppen R₁ eine Kohlenwasserstoffgruppe mit mindestens 7 Kohlenstoffatomen darstellen, die Gruppen R₂ eine Kohlenwasserstoffgruppe mit 1 bis 22 Kohlenstoffatomen darstellen und die Gruppen R₃, R₄ und R₅ Wasserstoffe und Alkylgruppen mit 1 bis 2 Kohlenstoffatomen darstellen.

2. Anti-Agglutinierungsmittel nach Anspruch 1, **dadurch gekennzeichnet, dass** die Gruppe R₁ eine Kohlenwasserstoffgruppe mit 10 bis 22 Kohlenstoffatomen ist.

3. Anti-Agglutinierungsmittel nach Anspruch 1 oder 2, **dadurch gekennzeichnet, dass** R₂ eine Kohlenwasserstoffgruppe mit 2 bis 8 Kohlenstoffatomen darstellt.

4. Anti-Agglutinierungsmittel nach Anspruch 1, 2 oder 3, **dadurch gekennzeichnet, dass** die Gruppen R₃. R₄ oder R₅ Wasserstoff sind.

5. Anti-Agglutinierungsmittel nach einem der vorhergehenden Ansprüche, **dadurch gekennzeichnet, dass** es 0,2 bis 20 Gew.-%, vorzugsweise 0,5 bis 5 Gew.-% eines Salzes mit der allgemeinen Formel (Ia) oder (Ib) zusätzlich zu Öl oder Wachs, möglichen Füllstoffen und anderen Anti-Agglutinierungsmitteln, Schutzmitteln und Additiven enthält.

6. Anti-Agglutinierungsmittel nach einem der vorhergehenden Ansprüche, **dadurch gekennzeichnet, dass** es für den Zweck der Einstellung der Ladung des Salzes zusätzlich etwa 5 bis 100 Mol% eines Überschusses an einer anionischen oder vorzugsweise kationischen Tensidverbindung enthält.

7. Verfahren zur Herstellen eines Anti-Agglutinierungsmittels für ein körniges Produkt gemäß einem der vorherigen Ansprüche, **dadurch gekennzeichnet, dass** eine Verbindung mit einer Formel (II):
R₁-COOH (II)
mit einer Verbindung der Formel (III):
H₂N-R₂-NH₂ (III)
umgesetzt wird, um ein Salz mit der Formel (Ia)' zu bilden:
R₁-COO⁻⁺NH₃-R₂-NH₃⁺⁻OOC-R₁ (Ia)'
oder eine Verbindung mit der Formel (IV) :
R₁-NH₂ (IV)
mit einer Verbindung mit einer Formel (V):
HOOC-R₂-COOH (V)
umgesetzt wird, um ein Salz mit der Formel (Ib)' zu bilden:
R₁-NH₃⁺⁻OOC-R₂-COO⁻⁺NH₃-R₁ (Ib)'
in denen die Gruppen R₁ eine Kohlenwasserstoffgruppe mit mindestens 7 Kohlenstoffatomen darstellen und die Gruppen R₂ eine Kohlenwasserstoffgruppe mit 1 bis 22 Kohlenstoffatomen darstellen.

8. Verfahren nach Anspruch 7, **dadurch gekennzeichnet, dass** R₁ eine Kohlenwasserstoffgruppe mit 10 bis 22 Kohlenstoffatomen ist.

9. Verfahren nach Anspruch 7 oder 8, **dadurch gekennzeichnet, dass** R₂ eine Kohlenwasserstoffgruppe mit 2 bis 8 Kohlenstoffatomen ist.

10. Verfahren nach einem der Ansprüche 7 bis 9, **dadurch gekennzeichnet, dass** sich das Molverhältnis R₁ : R₂ der umzusetzenden Verbindungen um 1 bis 60 %, vorzugsweise 1 bis 20 %, von dem 2 : 1 Stöchiometrieverhältnis unterscheidet.

11. Verfahren nach einem der Ansprüche 7 bis 10, **dadurch gekennzeichnet, dass** die Reaktanten, die eine Säure und ein Amin sind, jeweils zu einem separaten Ölansatz unter gleichzeitigem Mischen und möglichem Erhitzen zugesetzt werden, oder die Reaktanten zu dem gleichen Ölansatz mit anschließender möglicher Erhitzung zugesetzt werden.

12. Verfahren nach einem der Ansprüche 7 bis 11, **dadurch gekennzeichnet, dass** die Reaktanten entweder jeweils zu einem separaten Lösungsmittelansatz zugesetzt werden, die dann kombiniert werden, oder zu dem gleichen Lösungsmittelansatz zugegeben werden, wobei nach Verdampfung des Lösungsmittels ein Salz gebildet wird.

13. Verfahren nach einem der Ansprüche 7 bis 12, **dadurch gekennzeichnet, dass** die Reaktanten, die ein Säuresalz und ein Ammoniumsalz sind, jeweils zu einem separaten Wasseransatz zugesetzt werden, die dann kombiniert werden, oder zu dem gleichen Wasseransatz zugesetzt werden, woraufhin eine Abtrennung des ausgefallenen Produkts von dem Wasser erfolgt.

14. Verfahren nach einem der Ansprüche 7 bis 13, **dadurch gekennzeichnet, dass** die Reaktanten zu der Beschichtung der Teilchen des körnigen Produkts gegeben werden und in der Umgebung der steigenden Beschichtungstemperatur der Teilchen umgesetzt werden.

15. Verwendung eines Anti-Agglutinierungsmittels gemäß einem der Ansprüche 1 bis 6 zur Verhinderung der Kuchenbildung eines körnigen Düngemittelprodukts.

16. Verwendung nach Anspruch 15, bei der eine ölige oder wachsartige Beschichtungsmittelmischung erhitzt wird, um eine flüssige, niederviskose Mischung herzustellen, die dann das zuvor genannte Salz leicht löst und dispergiert und die anschließend auf die Oberfläche der Teilchen des körnigen Produkts durch Sprühen in Form von feinen Tröpfchen ausgebreitet werden kann.

17. Körniges Düngemittelprodukt, **dadurch gekennzeichnet, dass** die Körner des Düngemittelprodukts mit einem Anti-Agglutinierungsmittel gemäß einem der Ansprüche 1 bis 6 behandelt worden sind

18. Körniges Düngemittelprodukt nach Anspruch 17, **dadurch gekennzeichnet, dass** die Teilchen mit einer Mischung behandelt worden sind, die zusätzlich zu dem Salz auch Öl oder Wachs, möglicherweise Füllstoffe und andere Agglutinierungsmittel, Schutzmittel und Additive enthält.

19. Körniges Produkt nach Anspruch 17 oder 18, **dadurch gekennzeichnet, dass** das Düngemittel ein N-P-K-Düngemittel ist.

## Revendications

1. Agent anti-agglomérant pour engrais granulaire, à base d'une amine aliphatique cationique et d'un acide carboxylique, **caractérisé par le fait qu'**il comprend un sel de formule générale (Ia):
R₁-N(R₃R₄R₅)⁺⁻OOC-R₂-COO⁻⁺N(R₃R₄R₅)-R₁ (Ia)
ou de formule générale (Ib):
R₁-COO⁻⁺N(R₃R₄R₅)-R₂-N(R₃R₄R₅)⁺⁻OOC-R₁ (Ib)
formules dans lesquelles les groupes R₁ représentent un groupe hydrocarbyle ayant au moins 7 atomes de carbone, les groupes R₂ représentent un groupe hydrocarbylène ayant de 1 à 22 atomes de carbone et les groupes R₃, R₄ et R₅ représentent des atomes d'hydrogène ou des groupes alkyle ayant 1 et 2 atomes de carbone.

2. Agent anti-agglomérant selon la revendication 1, **caractérisé par le fait que** le groupe R₁ représente un groupe hydrocarbyle ayant de 10 à 22 atomes de carbone.

3. Agent anti-agglomérant selon la revendication 1 ou 2, **caractérisé par le fait que** le groupe R₂ représente un groupe hydrocarbylène ayant de 2 à 8 atomes de carbone.

4. Agent anti-agglomérant selon la revendication 1, 2 ou 3, **caractérisé par le fait que** les groupes R₃, R₄ ou R₅ représentent des atomes d'hydrogène.

5. Agent anti-agglomérant selon l'une quelconque des revendications précédentes, **caractérisé par le fait qu'**il contient de 0,2 à 20 % en poids, de préférence de 0,5 à 5 % en poids d'un sel ayant la formule générale (Ia) ou (Ib) en plus d'huile ou de cire, de charges éventuelles et d'autres agents anti-agglomérant, d'agents de protection et d'additifs.

6. Agent anti-agglomérant selon l'une quelconque des revendications précédentes, **caractérisé par le fait qu'**il contient en outre, afin d'ajuster la charge dudit sel, environ 5 à 100 % en moles d'une quantité en excès d'un composé tensioactif anionique ou de préférence cationique.

7. Procédé de préparation d'un agent anti-agglomérant pour un produit granulaire selon l'une quelconque des revendications précédentes, **caractérisé par le fait qu'**un composé de formule (II) :
R₁-COOH (II)
est mis à réagir avec un composé de formule (III) :
H₂N-R₂-NH₂ (III)
pour former un sel de formule (Ia)':
R₁-COO⁻⁺NH₃-R₂-NH₃⁺⁻OOC-R₁ (Ia)'
ou un composé de formule (IV):
R₁-NH₂ (IV)
est mis à réagir avec un composé de formule (V) :
HOOC-R₂-COOH (V)
pour former un sel de formule (Ib)' :
R₁-NH₃⁺⁻OOC-R₂-COO⁻⁺NH₃-R₁ (Ib)'
dans laquelle les groupes R₁ représentent un groupe hydrocarbyle ayant au moins 7 atomes de carbone et les groupes R₂ représentent un groupe hydrocarbylène ayant de 1 à 22 atomes de carbone.

8. Procédé selon la revendication 7, **caractérisé par le fait que** R₁ représente un groupe hydrocarbyle ayant de 10 à 22 atomes de carbone.

9. Procédé selon la revendication 7 ou 8, **caractérisé par le fait que** R₂ représente un groupe hydrocarbylène ayant de 2 à 8 atomes de carbone.

10. Procédé selon l'une quelconque des revendications 7 à 9, **caractérisé par le fait que** le rapport molaire R₁ : R₂ des composés à faire réagir diffère de 1 à 60 %, de préférence de 1 à 20 % par rapport au rapport stoechiométrique de 2 : 1.

11. Procédé selon l'une quelconque des revendications 7 à 10, **caractérisé par le fait que** les réactifs, qui sont un acide et une amine, sont ajoutés chacun dans une charge d'huile séparée, sous agitation simultanée et éventuellement chauffage, ou par addition dans la même charge d'huile suivie éventuellement d'un chauffage.

12. Procédé selon l'une quelconque des revendications 7 à 11, **caractérisé par le fait que** les réactifs sont soit ajoutés chacun dans une charge de solvant séparée, ces charges étant ensuite combinées, soit ajoutés dans la même charge de solvant, formant un sel après évaporation du solvant.

13. Procédé selon l'une quelconque des revendications 7 à 12, **caractérisé par le fait que** les réactifs, qui sont un sel d'acide et un sel d'ammonium, sont soit ajoutés chacun dans une charge d'eau séparée, ces charges étant ensuite combinées, soit ajoutés dans la même charge d'eau, le produit précipité étant ensuite séparé de l'eau.

14. Procédé selon l'une quelconque des revendications 7 à 13, **caractérisé par le fait que** les réactifs sont ajoutés à l'enrobage des particules du produit granulaire et mis à réagir dans l'environnement de température accrue d'enrobage des particules.

15. Utilisation d'un agent anti-agglomérant selon l'une quelconque des revendications 1 à 6, pour éviter la formation d'agglomérat d'un engrais granulaire.

16. Utilisation selon la revendication 15, dans laquelle le mélange d'un agent d'enrobage huileux ou cireux est chauffé pour produire un mélange liquide de faible viscosité, dans lequel le sel mentionné ci-dessus se dissout et se disperse facilement et qui peut être ensuite pulvérisé à la surface des particules du produit granulaire par pulvérisation sous forme de fines gouttelettes.

17. Engrais granulaire **caractérisé par le fait que** les granules de l'engrais ont été traités avec un agent anti-agglomérant selon l'une quelconque des revendications 1 à 6.

18. Produit granulaire selon la revendication 17, **caractérisé par le fait que** les particules ont été traitées avec un mélange contenant, en plus dudit sel, également de l'huile ou de la cire, éventuellement des charges et d'autres agents anti-agglomérant, des agents de protection et des additifs.

19. Produit granulaire selon la revendication 17 ou 18, **caractérisé par le fait que** l'engrais est un engrais N-P-K.
